(19) Europäisches Patentamt

European Patent Office

Office européen des brevets

(11) Veröffentlichungsnummer : **0 093 299**
B1

(12) **EUROPÄISCHE PATENTSCHRIFT**

(45) Veröffentlichungstag der Patentschrift :
11.12.85

(51) Int. Cl.⁴ : **G 01 B 5/00**

(21) Anmeldenummer : 83103708.0

(22) Anmeldetag : 16.04.83

(54) Tastkopf für Koordinatenmessgeräte.

(30) Priorität : 29.04.82 DE 3215878

(43) Veröffentlichungstag der Anmeldung :
09.11.83 Patentblatt 83/45

(45) Bekanntmachung des Hinweises auf die Patenterteilung : 11.12.85 Patentblatt 85/50

(84) Benannte Vertragsstaaten :
CH DE FR GB IT LI NL SE

(56) Entgegenhaltungen :
DE-A- 2 743 665
DE-B- 1 773 672
DE-B- 2 440 692
DE-B- 2 705 787
DE-C- 2 365 984
DE-C- 2 712 181

(73) Patentinhaber : Firma Carl Zeiss

D-7920 Heidenheim (Brenz) (DE)

(72) Erfinder : Werner, Walter, Dr.
Carl-Zeiss-Strasse 30
D-7923 Königsbronn (DE)
Erfinder : Herzog, Klaus, Ing.grad.
Kopernikusstrasse 42
D-7082 Oberkochen (DE)
Erfinder : Szenger, Franz, Ing.grad.
Wielandstrasse 14
D-7923 Königsbronn (DE)

EP 0 093 299 B1

Jouve, 18, rue St-Denis, 75001 Paris, France

## Beschreibung

Die Erfindung betrifft einen Tastkopf, dessen Taster durch Rückstellkräfte in ein seine Nullstellung bestimmendes Lager gedrängt wird, aus welchem heraus er relativ zu seiner Halterung in einer Verschieberichtung verschiebbar und be-züglich dieser Verschieberichtung allseitig kipp-bar ist.

Derartige, z. B. in der DE-C-23 67 633 oder der DE-A-27 43 665 beschriebene Tastköpfe finden in Koordinatenmeßgeräten, vorzugsweise Mehr-koordinatenmeßmaschinen Verwendung und die-nen dazu ein Signal zu erzeugen, wenn der Taster, d. h. der bewegliche Teil des Tastkopfes das zu vermessende Werkstück berührt.

Zur Erzeugung dieses Signal sind in das die Nullstellung des Tasters bestimmende Lager oftmals Schaltelemente integriert, die bei einem Auslenken des Tasters aus seinem Lager ansprechen. Es sind allerdings beispielsweise aus der DE-C-27 12 181 auch Taster bekannt, bei denen die Signalerzeugung unabhängig von einer Auslenkung des Tasters ist, bei denen also das die Nullstellung bestimmende Lager lediglich als nachgebende Knickstelle dient, die verhindert, daß der Taster im Zuge des Antastvorganges deformiert wird.

In jedem Falle hängt die Genauigkeit des für die Koordinatenmessung benutzten Tastkopfes davon ab, wie gut die Nullstellung des Tasters nach jedem Antastvorgang beim Zurückkehren in sein Lager reproduziert wird.

Bei den vorstehend genannten, bekannten Tastköpfen besteht das Lager aus einer selbst-zentrierenden Dreipunktauflage am gehäusefe-sten Teil des Tastkopfes, auf die der Taster mit Federkraft gedrückt bzw. gezogen wird. Um ein Verschieben des Tasters in alle sechs Raumrichtungen zu ermöglichen ist der Taster häufig mittelbar an einem Zwischenring gelagert, der seinerseits über ein weiteres Dreipunktlager am gehäusefesten Teil befestigt ist und mit einer im Vergleich zum Taster entgegengesetzt gerichteten Federkraft gegen das Gehäuse vorgespannt ist.

Die verwendeten Dreipunktlager enthalten V-förmige Vertiefungen, in die Kugeln bzw. Zylinder gleitend einrasten. Die in diesen Lagern auftretende, nicht zu vernachlässigende Gleitreibung beeinträchtigt das Rückkehren des Tasters in seine exakte Null-Lage und beschränkt daher die Meßgenauigkeit von Koordinatenmeßeinrichtungen, die mit derartigen Tastern ausgerüstet sind.

Dies Problem tritt auch bei dem in der DE-C-23 65 984 beschriebenen Tastkopf auf, dessen Taster auf einem nicht selbst zentrierenden, einfachen Dreipunktlager aufliegt, und der separate Mittel zur Zentrierung des Tasters und zur Sicherung gegen Torsion um die Tasterlängsachse aufweist. Auch der in der DE-A-22 48 967 beschriebene Tastkopf, dessen Taster mit mehreren Spanndrähten zentriert wird, besitzt ein Lager mit relativ hohen Reibwerten, da der Taster dort über eine ringförmige Auflagefläche am gehäusefesten Teil anliegt.

Es ist die Aufgabe der vorliegenden Erfindung, einen Tastkopf der eingangs genannten Art zu schaffen, der eine im wesentlichen reibungsfreie Tasterlagerung und einen verhältnismäßig einfachen Aufbau besitzt.

Diese Aufgabe wird gemäß dem kennzeichnenden Teil des Hauptanspruchs dadurch gelöst, daß der Taster an mindestens drei sich im wesentlichen in Verschieberichtung erstreckenden Fäden bzw. Bändern aufgehängt und mit Hilfe einer torsionssteifen Zentriereinrichtung stabilisiert ist.

Der erfindungsgemäße Taster zeichnet sich durch eine sehr viel bessere Reproduzierbarkeit der Taster-Null-Lage aufgrund der reibungsfreien Aufhängung an Fäden in Verschieberichtung aus. Eine solche Fäden- bzw. Bänderaufhängung ist zudem einfacher zu realisieren als eine selbstzentrierende Dreipunktauflage, da zur Aufhängung handelsübliche Bauteile verwendet werden können, anstelle eines in Richtung auf minimale Reibung spezialbehandelten Auflagers.

Als torsionssteife Zentriereinrichtung kann ebenfalls eine geeignete Faden- bzw. Bänderanordnung aus im einfachsten Falle zwei Fäden bzw. Bändern gewählt werden. Weitere vor-teilhafte alternative Anordnungen zur reibungs-freien und torsionssteifen Zentrierung des Tasters sind Membranfedern bzw. Faltenbälge, an denen der Tasterschaft zu befestigen ist.

Außerdem ist es möglich, die Zentrierung des Tasters über längs der Verschieberichtung in Nuten rollende Kugeln zu bewirken. Diese Anordnung ist zwar nicht völlig reibungsfrei, bietet jedoch wegen dem infolge rollender Reibung gegenüber dem Stand der Technik deutlich verringerten Reibwert des Lagers Vorteile hinsichtlich der Genauigkeit der Rückführung des Tasters. Diese Anordnung eignet sich außerdem hervorragend dazu, den Tastkopf sowohl hängend als auch liegend zu betreiben, da das Gewicht des Tasters mit der daran befestigenden Taststiftkombination von mindestens einer der Kugeln aufgenommen wird.

Es ist zweckmäßig zur Aufhängung des Tasters Bänder zu verwenden, beispielsweise Stahlbänder, und sie zwischen ihren Befestigungspunkten um ca. 90° verdreht einzubauen. Damit ist sichergestellt, daß die Bänder bei allen Antastvorgängen in Richtung ihrer hochflexiblen Breitseite nachgeben. Weiterhin ist es vorteilhaft, jedes Band als « Paket » aus mehreren durch Abstandshalter geringer Dicke separierten Einzelbändern aufzubauen, um das Verhältnis von Tragfähigkeit zur Flexibilität zu optimieren.

Weiteren vorteilhafte Ausgestaltungen der Erfindung sind den Unteransprüchen entnehmbar und werden nachstehend anhand der Fig. 1-9 der beigefügten Zeichnungen näher erläutert.

Figur 1  zeigt einen Schnitt durch ein erstes Ausführungsbeispiel eines Tastkopfes in Ruhestellung ;

Figur 2  zeigt den Tastkopf aus Fig. 1 in ausgelenktem Zustand ;

Figur 3  zeigt einen Schnitt durch ein zweites Ausführungsbeispiel eines Tastkopfes ;

Figur 4  zeigt einen weiteren Schnitt durch das Ausführungsbeispiel nach Fig. 3 längs der Linie IV-IV in Fig. 3 ;

Figur 5  zeigt einen Schnitt durch ein drittes Ausführungsbeispiel eines Tastkopfes ;

Figur 6  zeigt einen weiteren Schnitt durch das Ausführungsbeispiel nach Fig. 5 längs der Linie VI-VI in Fig. 5 ;

Figur 7  zeigt einen Schnitt durch ein gegenüber dem Ausführungsbeispiel nach Fig. 5 und 6 leicht verändertes, viertes Ausführungsbeispiel in einer Ebene senkrecht zur Tasterlängsachse ;

Figur 8  ist eine perspektivische Darstellung eines fünften Ausführungsbeispiels der Erfindung ;

Figur 9  ist eine detailliertere Darstellung der für die Ausführungsbeispiele nach Fig. 5-7 verwendeten Bänder.

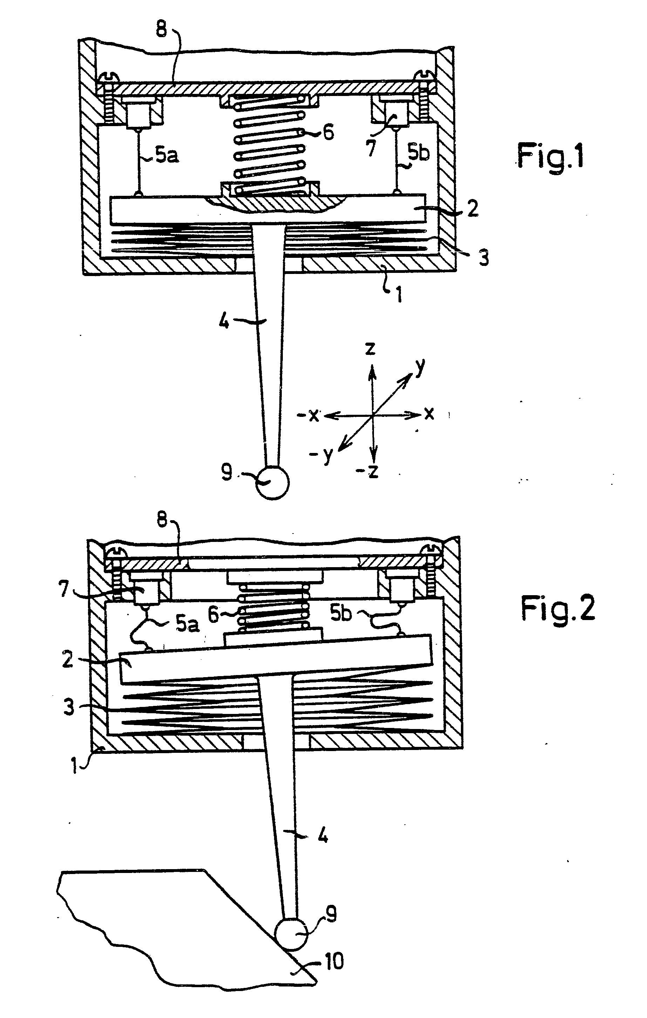

Der in den Fig. 1 und 2 dargestellte Tastkopf besitzt ein zylindrisches Gehäuse 1, in dem eine ebenfalls zylindrische, den Taststift 4 mit der Tastkugel 9 tragende Platte 2 an drei Stahlfäden 5a-c aufgehängt ist. Die im gleichen Abstand zur Achse des Taststifts 4 jeweils im Winkel von 120° zueinander versetzt angebrachten Stahlfäden werden durch eine Feder 6 gespannt, die sich an einer das Gehäuse 1 maschinenseitig abschließenden Platte 8 abstützt. In die Aufhängepunkte der Drähte 5 sind piezoelektrische Sensoren 7 integriert, die bei Nachlassen der Spannung der Drähte 7 während des Antastvorganges (Fig. 2), bei dem die Tastkugel 9 das Werkstück 10 berührt, ein elektrisches Signal abgeben.

Zur Zentrierung des Taststiftes 4 und zur Sicherung gegen Torsion ist zwischen der den Taststift 4 tragenden Platte 2 und dem den Tastkopf 1 objektseitig abschließenden Gehäuseteil ein Faltenbalg 3 befestigt, der von der Feder 6 so zusammengedrückt wird, daß die Faltflächen des Balges 3 fast aneinander anliegen, sich aber nicht berühren. Das zwischen den Faltflächen verbleibende Luftpolster dient zur Dämpfung der Bewegung des Tasters bei seiner Rückkehr in die den Nullpunkt bestimmende Ruhelage.

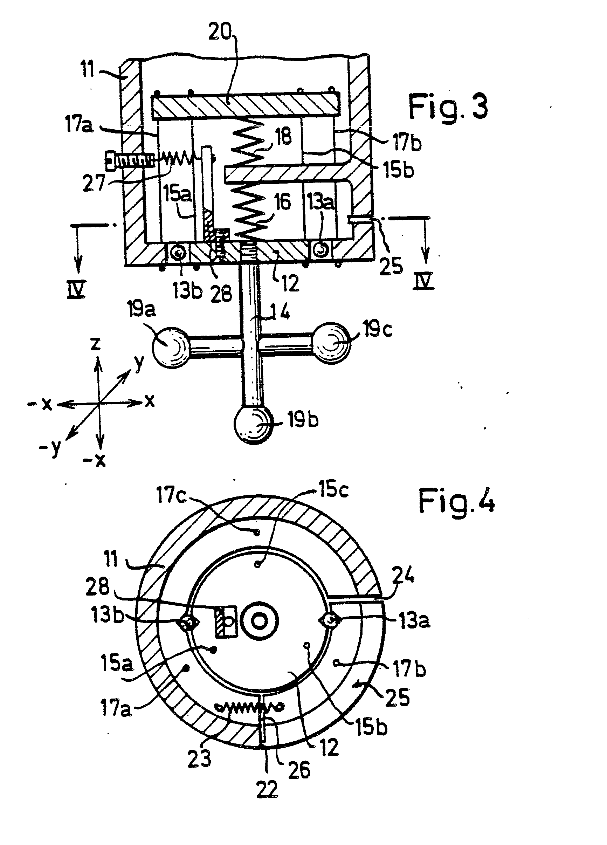

Der in den Fig. 3 und 4 dargestellte Taster besitzt einen der Ausführungsform nach Fig. 1 und 2 sehr ähnlichen Aufbau, bestehend aus einem Gehause 11 und einer an drei Fäden 15a-c aufgehängten Platte 12, an der eine sternförmige Taststiftkombination 14 mit den Tastkugeln 19a, b und c befestigt ist.

Allerdings ist die Platte 12 nicht direkt am Gehäuse 11 sondern an einem Zwischenkörper 20 aufgehängt, der seinerseits an drei Fäden 17a-c befestigt ist. Die sich an einem Arm des Gehäuses 11 abstützenden Federn 16 und 18 spannen die Fäden 15 und 17, die die Null-Lage der Tastkugeln 19a-c in Bezug auf die mit der Tasterlängsachse zusammenfallende Verschieberichtung Z definieren.

Die Platte 12 und damit der Taststift 14 werden durch zwei Kugeln 13a und 13b in der Ebene senkrecht zur Längsachse des Taststifts 14 zentriert und gegen Torsion um diese Achse gesichert. Dazu befinden sich die Kugeln 13a und b in jeweils einem von einander gegenüberliegenden, V-förmigen Nuten im Gehäuse 11 und in der Platte 12 gebildeten Käfig, an dessen Wänden sie bei Verkippungen oder Verschiebungen der Platte 12 abrollen.

Damit bei größeren Kippwinkeln des Tasters keine Klemmung der Kugeln 13 auftritt, ist der die Nut für die Kugel 13a enthaltende Teil des Gehäuses 11 durch Schlitze 24 und 25 sowie 26 als um den verbleibenden Steg 22 beweglicher Hebelarm ausgebildet, der von einer Feder 23 gegen die Platte 12 vorgespannt wird.

Aufgrund des beschriebenen Aufbaus sind die Tastkugeln 19a-c des Tasters nach Fig. 3 und 4 in allen 6 Raumrichtungen + X, − X ; + Y, − Y ; + Z, − Z bewegbar. Selbstverständlich läßt sich auch der in Fig. 1 bzw. 2 beschriebene Taster, der lediglich in den 5 Richtungen + − Z, + − Y, + Z bewegbar ist, für Antastungen in − Z-Richtung erweitern, wenn der Taststift 4 in der in den Fig. 3-4 dargestellten Weise indirekt über einen Zwischenkörper aufgehängt wird. Allerdings ist keine direkte Zentrierung des Stiftes 4 gegenüber dem Gehäuse 1 möglich ; die Zentrierung muß dort vielmehr mittelbar über den Zwischenkörper erfolgen, an dem dann zwei konzentrisch zueinander angeordnete Faltenbälge zu befestigen sind.

Der Tastkopf nach Fig. 3 und 4 eignet sich auch sehr gut für waagerechten Betrieb, bei dem die Taststiftlängsachse in der Ebene X, Y liegt, da das Gewicht des Taststifts 14 durch die Kugel 13b abgefangen werden kann. Zum Ausgleich von Kippmomenten des Taststifts 14 bei waagerechtem Betrieb ist eine Feder 27 mit einstellbarer Federkraft zwischen einem an der Platte 12 befestigten Arm 28 und dem Gehäuse 11 angebracht.

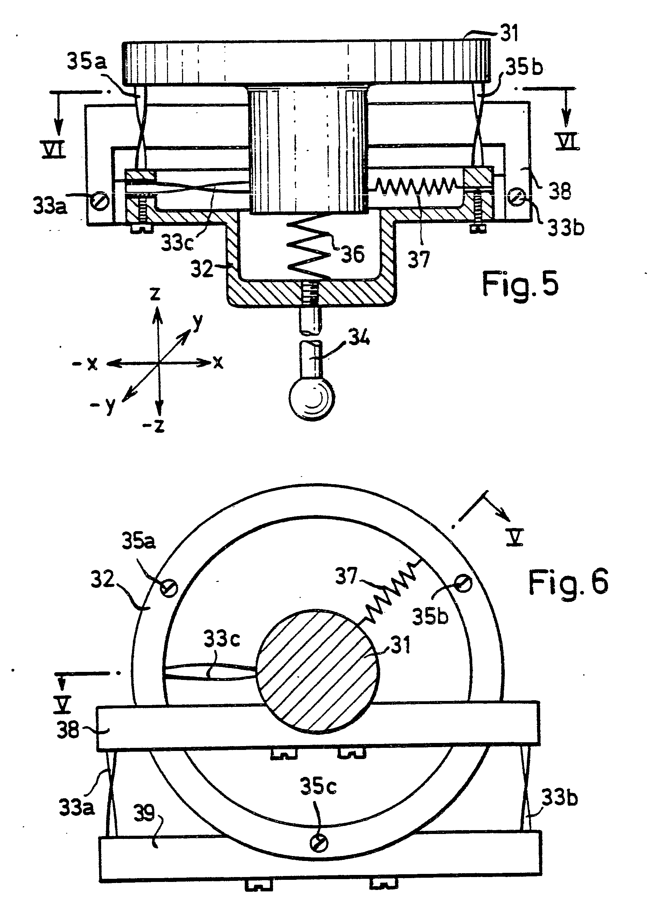

In den Fig. 5 und 6 ist eine weiteres Ausführungsbeispiel eines Tasters beschrieben, bei dem der den Taststift 34 tragende, bewegliche Teil 32 nicht nur in Verschieberichtung an den von der Feder 36 gespannten Bändern 35a, b und c aufgehängt ist, sondern außerdem durch drei weitere, in einer Ebene senkrecht zur Verschieberichtung angeordnete Bänder 33a, b und c zentriert und gegen Torsion gesichert wird.

Um die beispielsweise für den Betrieb mit einer außerhalb der Tasterlängsachse angebrachten Tastkugel nötige, hohe Torsionssteifigkeit zu erzielen sind die Bänder 33a und 33b zwischen zwei jeweils am zylindrischen gehäusefesten Teil 31 und am beweglichen Teil 32 starr befestigten Stäben 38 und 39 gespannt, die die Angriffspunkte der Bänder 33a und 33b im Sinne einer Verbreiterung der Basis möglichst weit auseinanderlegen. Zur Zentrierung in X-Richtung dient das Band 33c. Die drei Bänder 33a, b und c werden gemeinsam von einer gegen die Bänder geneigt eingebauten Feder 37 gespannt gehalten.

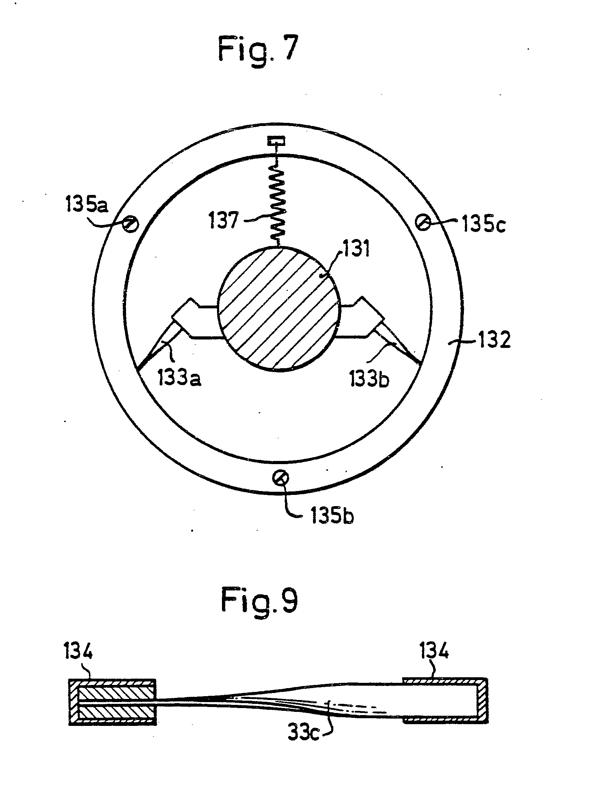

Der Aufbau des in Fig. 5 und 6 dargestellten Tasters läßt sich bei geringfügigen Abstrichen an die Torsionssteifigkeit vereinfachen, wenn anstelle der drei zentrierenden Bänder 33a, b und c zwei Bänder 133a und 133b in der in Fig. 7 skizzierten Anordnung verwendet werden. Die Bänder 133a und b sind zueinander geneigt und schneiden sich in der Verlängerung in einem Punkt, der exzentrisch zur Längsachse des Tastkopfes liegt. Gespannt werden die Bänder 133a und b durch eine Feder 137, deren Zugkraft in Richtung der Winkelhalbierenden des von den Bändern 133a und b eingeschlossenen Winkels wirkt.

Wie in Fig. 9 am Beispiel des Bandes 33c dargestellt ist sind die Enden der Bänder in zylindrische Hülsen 134, beispielsweise durch Löten, eingefaßt. Diese Hülsen werden von den entsprechenden Bohrungen in den aufzuhängenden Teil des Tasters aufgenommen und nach Spannung und Verdrillung um den gewünschten Betrag von einer Schraube festgeklemmt. Der Verdrillwinkel beträgt ca. 90°, wodurch sichergestellt ist, daß sich die Bänder in alle Richtungen leicht verbiegen lassen.

Es ist ohne weiteres möglich in den Hülsen 134 statt eines einzelnen Bandes 33c mehrere Bänder mit ihren Enden zusammen einzufassen, um die Tragfähigkeit der Aufhängung bei gleichbleibender Elastizität zu erhöhen. Zur Verhinderung von Reibung zwischen den Bändern ist es dann zweckmäßig im Bereich der Hülse Abstandshalter zwischen den Einzelbändern einzufügen.

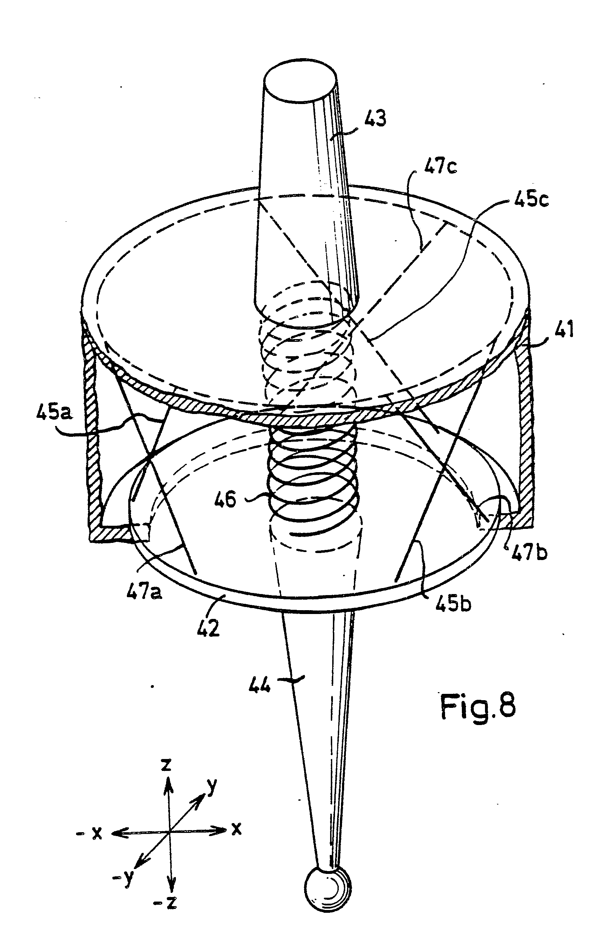

Einen besonders einfachen symmetrischen Aufbau besitzt der in Fig. 8 dargestellte Taster : An dem mit einem Aufnahmekonus 43 versehenen, gehäusefesten Teil 41 ist eine den Taststift 44 tragende, bewegliche Platte 42 mit sechs Stahlfäden aufgehängt, die von der Feder 46 gestreckt werden. Die Stahlfäden sind in zwei Gruppen 45a, b und c und 47a, b und c zu je drei Fäden angeordnet, die gegenläufig um die Taststiftachse verdreht sind. Jeweils zwei Fäden 45a, 47a und 45b, 47b sowie 45c und 47c aus beiden Gruppen überkreuzen sich ohne jedoch einander zu berühren. Da die Aufhängepunkte der Fäden 45 und 47 an der Platte 42 enger beieinander liegen als die Aufhängepunkte am gehäusefesten Teil 41 liegen die Fäden 45 und 47 also etwa auf dem Mantel eines Kegelstumpfes.

Aufgrund der gegeneinander verdrehten bzw. sich überkreuzenden Anordnung der Fäden wird eine sehr torsionssteife und zentrierende Lagerung des Taststifts 34 erzielt, wobei die zentrierende Wirkung durch die kegelförmige Neigung der Fäden 45 und 47 gegen die Taststiftachse noch verstärkt wird. Dieser Taster kann sehr kompakt mit geringen Abmessungen gefertigt werden, ohne daß die Zugänglichkeit aller außenumfänglich angeordneten Aufhängepunkte der Fäden 45 und 47 beeinträchtigt wird.

Es ist ohne weiteres möglich, wie in den Figuren 4 und 5 beschrieben, den Taststift 44 mittelbar über einen Zwischenkörper zu lagern, wenn der Taster in allen sechs Raumrichtungen beweglich sein soll. In diesem Falle kann der Zwischenkörper ebenso wie die Platte 42 an sechs paarweise einander überkreuzenden Fäden aufgehängt werden.

Der in Fig. 8 dargestellte Tastkopf benötigt ebenso wie die in den Fig. 4-7 dargestellten Ausführungsbeispiele Sensoren, die bei Berührung zwischen den Tastkugeln und den anzutastenden Werkstücken ein verwertbares Signal abgeben. Zu diesem Zwecke können beispielsweise piezoelektrische Elemente verwendet werden, die, wie in Fig. 1 und 2 beschrieben, an den Aufhängepunkten der Fäden bzw. Bänder angeordnet sind oder an geeigneter Stelle in den beweglichen Teil des Tastkopfes integriert sind. Derartige Anordnungen sind beispielsweise der DE-C-27 12 181 entnehmbar.

**Patentansprüche**

1. Tastkopf, dessen Taster durch Rückstellkräfte in ein seine Nullstellung bestimmendes Lager gedrängt wird, aus welchem heraus er relativ zu seiner Halterung in einer Verschieberichtung (Z) verschiebbar und bezüglich dieser Verschieberichtung allseitig kippbar ist, dadurch gekennzeichnet, daß der Taster (2, 4 ; 12, 14 ; 32, 34 ; 132 ; 42, 44) an mindestens drei sich im wesentlichen in Verschieberichtung (Z) erstreckenden Fäden (5 ; 15, 17 ; 45, 47) bzw. Bändern (35 ; 135) aufgehängt und mit Hilfe einer torsionssteifen Zentriereinrichtung (3 ; 13 ; 33 ; 133 ; 45, 47) stabilisiert ist.

2. Tastkopf nach Anspruch 1, dadurch gekennzeichnet, daß die Zentriereinrichtung aus mindestens zwei weiteren Fäden bzw. Bändern (33a-c ; 133a, b) besteht, die im wesentlichen in der Ebene senkrecht zur Verschieberichtung (Z) angeordnet sind.

3. Tastkopf nach Anspruch 2, dadurch gekennzeichnet, daß die weiteren Fäden bzw. Bänder (33 ; 133) von einer Feder (37 ; 137) gemeinsam gestreckt werden.

4. Tastkopf nach Anspruch 1, dadurch gekennzeichnet, daß die torsionssteife Zentriereinrichtung bewegliche Kugeln (13a, b) umfaßt, die unter Vorspannung zwischen gegenüberliegenden, sich in Verschieberichtung (Z) erstreckenden Längsnuten im einem gehäusefesten Teil (11) und einer mit dem Taster verbunden Platte (12) angeordnet sind.

5. Tastkopf nach Anspruch 4, dadurch gekennzeichnet, daß die Kugeln (13a, b) auf gegenüberliegenden Seiten des Tasters angeordnet sind, derart, daß eine der beiden Kugeln (13a) bei waagerechtem Betrieb des Tastkopfs das Gewicht des Tasters (12, 14) abfängt.

6. Tastkopf nach Anspruch 1, dadurch gekennzeichnet, daß als Zentriereinrichtung mindestens ein den Taster (2, 4) und das Gehäuse (1) verbindender Faltenbalg (3) bzw. eine Membranfeder vorgesehen ist.

7. Tastkopf nach Anspruch 6, gekennzeichnet durch eine Anordnung des Faltenbalges (3) derart, daß zwischen den Faltflächen des Balges (3) in Ruhestellung des Tasters (2, 4) ein dünnes Luftpolster bleibt.

8. Tastkopf nach Anspruch 1, dadurch gekennzeichnet, daß der Taster (42, 44) an mindestens sechs Fäden (45a-c, 47a-c) bzw. Bändern aufgehängt ist, die in zwei gegenläufig um die Verschiebeachse (Z) verdrehten Gruppen (45, 47) angeordnet sind.

9. Tastkopf nach Anspruch 1-8, dadurch gekennzeichnet, daß die Fäden (5 ; 15, 17 ; 45, 47) bzw. Bänder (35 ; 135) der Tasteraufhängung etwa auf der Oberfläche eines Zylinders bzw. Kegelstumpfes angeordnet sind, dessen Achse mit der Verschieberichtung (Z) zusammenfällt.

10. Tastkopf nach Anspruch 1-9, dadurch gekennzeichnet, daß für die Aufhängung Bänder (33, 35 ; 133, 135) verwendet sind, die zwischen ihren jeweiligen Befestigungspunkten um ca. 90° verdrillt eingebaut sind.

11. Tastkopf nach Anspruch 1-10, dadurch gekennzeichnet, daß jedes Band aus mehreren, durch Abstandshalter geringer Dicke separierten Einzelbändern besteht.

12. Tastkopf nach Anspruch 1-11, dadurch gekennzeichnet, daß die Fäden bzw. Bänder (33, 35 ; 133, 135) der Aufhängung mit ihren Enden in Hülsen (134) gefaßt sind, die in Justierbohrungen im Gehäuse bzw. im Taster (32) befestigt sind.

13. Tastkopf nach Anspruch 1-12, dadurch gekennzeichnet, daß der Taster (12, 14) mittelbar an einem Zwischenkörper (20) aufgehängt ist, der seinerseits in entgegengesetzte Richtung wie der Taster (12, 14) am Gehäuse (11) aufgehängt ist.

14. Tastkopf nach Anspruch 13, dadurch gekennzeichnet, daß die Zentriereinrichtung (13a, b) den Taster (12, 14) direkt gegenüber dem Gehäuse (11) zentriert.

15. Tastkopf nach Anspruch 1-14, gekennzeichnet durch eine einstellbare Feder (27) zur Kompensation des Tastergewichtes bei waagerechtem Betrieb des Tastkopfes (11).

16. Tastkopf nach Anspruch 1-14, dadurch gekennzeichnet, daß zug- bzw. druckempfindliche Sensoren (7) in der Nähe der Aufhängepunkte der Fäden (5) bzw. Bänder angeordnet sind.

## Claims

1. A probe head whose feeler is forced by restoring forces into a support which determines its zero position, from which support it can be displaced in one direction (Z) relative to its mounting and can be tilted in all directions with respect to this direction of displacement, characterized by the fact that the feeler (2, 4 ; 12, 14 ; 32, 34 ; 132 ; 42, 44) is suspended from at least three threads (5 ; 15, 17 ; 45, 47) or bands (35 ; 135) which extend substantially in the direction of displacement (Z) and is stabilized by means of a torsionally rigid centering device (3 ; 13 ; 33 ; 133 ; 45, 47).

2. A probe head according to Claim 1, characterized by the fact that the centering device consists of at least two additional threads or bands (33a-c ; 133a, b) which are arranged substantially in the plane perpendicular to the direction of displacement (Z).

3. A probe head according to Claim 2, characterized by the fact that the additional threads or bands (33 ; 133) are jointly tensioned by a single spring (37 ; 137).

4. A probe head according to Claim 1, characterized by the fact that the torsionally rigid centering device comprises movable balls (13a, b) which are arranged under initial tension between facing longitudinal grooves extending in the direction of displacement (Z) within a part (11) which is held fast to the housing and a plate (12) which is connected to the feeler.

5. A probe head according to Claim 4, characterized by the fact that the balls (13a, b) are arranged on opposite sides of the feeler in such a manner that one of the two balls (13a) sustains the weight of the feeler (12, 14) in case of horizontal operation of the probe head.

6. A probe head according to Claim 1, characterized by the fact that as centering device there is provided at least one folded bellows (3) or a diaphragm spring which connects the feeler (2, 4) to the housing (1).

7. A probe head according to Claim 6, characterized by arrangement of the folded bellows (3) in such a manner that a thin air cushion remains between the surfaces of the folds of the bellows (3) in the at-rest position of the feeler (2, 4).

8. A probe head according to Claim 1, characterized by the fact that the feeler (42, 44) is suspended from at least six threads (45a-c, 47a-c) or bands which are arranged in two groups (45, 47) which are twisted in opposite direction around the axis of displacement (Z).

9. A probe head according to Claims 1 to 8, characterized by the fact that the threads (5 ; 15, 17 ; 45, 47) or bands (35 ; 135) of the feeler suspension are arranged approximately on the surface of a cylinder or conical frustum whose axis coincides with the direction of displacement (Z).

10. A probe head according to Claims 1 to 9, characterized by the fact that, for the suspension, bands (33, 35 ; 133, 135) are provided which are installed twisted by about 90° between their corresponding points of attachment.

11. A probe head according to Claims 1 to 10, characterized by the fact that each band consists of a plurality of individual bands separated by spacers of slight thickness.

12. A probe head according to Claims 1 to 11, characterized by the fact that the threads or bands (33, 35 ; 133, 135) of the suspension have their ends clamped in sleeves (134) which are fastened in adjustment holes within the housing and in the feeler respectively.

13. A probe head according to Claims 1 to 2, characterized by the fact that the feeler (12, 14) is suspended indirectly from an intermediate member (20) which in its turn is suspended from the housing (11) in the direction opposite to that of the feeler (12, 14).

14. A probe head according to Claim 13, characterized by the fact that the centering device (13a, b) centers the feeler (12, 14) directly against the housing (11).

15. A probe head according to Claims 1 to 14, characterized by an adjustable spring (27) to compensate for the weight of the feeler upon horizontal operation of the probe head (11).

16. A probe head according to Claims 1 to 14, characterized by the fact that stress-sensitive or pressure-sensitive sensors (7) are arranged in the vicinity of the points of suspension of the threads (5) or bands.

**Revendications**

1. Tête de palpage dont le palpeur est rappelé par des forces de rappel dans un palier définissant sa position zéro, à partir duquel il est déplaçable par rapport à son support dans une direction de déplacement (Z) et inclinable vers tous les côtés par rapport à cette direction de déplacement, caractérisée en ce que le palpeur (2, 4 ; 12, 14 ; 32, 34 ; 42, 44) est suspendu à au moins trois fils (5 ; 15, 17 ; 45, 47) ou rubans (35 ; 135) s'étendant essentiellement dans la direction de déplacement (Z) et est stabilisé à l'aide d'un dispositif de centrage (3 ; 13 ; 33 ; 133 ; 45, 47) rigide à la torsion.

2. Tête de palpage selon la revendication 1, caractérisée en ce que le dispositif de centrage est composé d'au moins deux fils ou rubans supplémentaires (33a-c ; 133a, b) qui sont disposés essentiellement dans un plan perpendiculaire à la direction de déplacement (Z).

3. Tête de palpage selon la revendication 2, caractérisée en ce que les fils ou rubans supplémentaires (33 ; 133) sont tendus conjointement par un ressort (37 ; 137).

4. Tête de palpage selon la revendication 1, caractérisée en ce que le dispositif de centrage rigide à la torsion comporte des billes mobiles (13a, b) qui sont disposées sous précontrainte entre des rainures s'étendant dans la direction de déplacement (Z) dans une pièce solidaire (11) du boîtier et une plaque (12) reliée au palpeur.

5. Tête de palpage selon la revendication 4, caractérisée en ce que les billes (13a, b) sont disposées sur des côtés opposés du palpeur, de manière que l'une des deux billes (13a) encaisse le poids du palpeur (12, 14) en cas d'utilisation de la tête de palpage en position horizontale.

6. Tête de palpage selon la revendication 1, caractérisée en ce que le dispositif de centrage est formé d'au moins un soufflet (3) ou un ressort à membrane reliant le palpeur (2, 4) et le boîtier (1).

7. Tête de palpage selon la revendication 6, caractérisé en ce que le soufflet (3) est disposé de manière qu'il reste un mince coussin d'air entre les faces des plis du soufflet (3) à la position de repos du palpeur (2, 4).

8. Tête de palpage selon la revendication 1, caractérisée en ce que le palpeur (42, 44) est suspendu à au moins six fils (45a-c, 47a-c) ou rubans qui sont disposés en deux groupes (45, 47) tournés en sens contraire l'un de l'autre autour de l'axe de déplacement (Z).

9. Tête de palpage selon une des revendications 1 à 8, caractérisée en ce que les fils (5 ; 15, 17 ; 45, 47) ou rubans (35 ; 135) de la suspension du palpeur sont disposés à peu près sur la surface d'un cylindre ou d'un cône tronqué dont l'axe coïncide avec la direction de déplacement (Z).

10. Tête de palpage selon une des revendications 1 à 9, caractérisée en ce que les rubans (33, 35 ; 133, 135) utilisés pour la suspension sont tordus sur environ 90° entre leurs points de fixation respectifs.

11. Tête de palpage selon une des revendications 1 à 10, caractérisée en ce que chaque ruban est composé de plusieurs rubans individuels séparés par des entretoises de faible épaisseur.

12. Tête de palpage selon une des revendications 1 à 11, caractérisée en ce que les fils ou rubans (33, 35 ; 133, 135) de la suspension sont sertis par leurs extrémités dans des douilles (134) qui sont fixées dans des perçages ajustés dans le boîtier ou dans le palpeur (32).

13. Tête de palpage selon une des revendications 1 à 12, caractérisée en ce que le palpeur (12, 14) est suspendu indirectement à une pièce intermédiaire (20) qui est elle-même suspendue au boîtier (11) en sens contraire au palpeur (12, 14).

14. Tête de palpage selon la revendication 13, caractérisée en ce que le dispositif de centrage (13a, b) centre le palpeur directement par rapport au boîtier (11).

15. Tête de palpage selon une des revendications 1 à 14, caractérisée par un ressort (27) réglable pour compenser le poids du palpeur en cas d'utilisation horizontale de la tête de palpage (11).

16. Tête de palpage selon une des revendications 1 à 14, caractérisée en ce que des capteurs (7) sensibles à la traction ou à la compression sont disposés à proximité des points de suspension des fils (5) ou des rubans.

Fig.1

Fig.2

Fig.3

Fig.4

Fig.5

Fig.6

## Fig. 7

135a 137 131 135c 133a 133b 132 135b

## Fig. 9

134 134 33c

Fig.8